# EUROPEAN PATENT APPLICATION

(11) **EP 2 637 236 A1**
(43) Date of publication of application: **11.09.2013**
(21) Application number: 13156056.7
(22) Date of filing: 21.02.2013
(51) Int. Cl.: H01M 2/10, H01M 2/20, H01M 10/48

(54) **Battery module and flat battery cell**

(30) Priority: 09.03.2012 JP 2012052620
(71) Applicant: Hitachi Ltd., Tokyo 100-8280 (JP)
(72) Inventor: SAKABE, Kei, Tokyo, 100-8220 (JP); ISHIKAWA, Katsumi, Tokyo, 100-8220 (JP)
(74) Representative: MERH-IP Matias Erny Reichl Hoffmann

(57) **Abstract**

A battery module and a flat battery cell that can reduce the man-hours required for connecting flat battery cells and eliminate the necessity of providing increased strength and enhanced insulation against vibration and other external forces. A stacked structure is obtained by stacking unidirectionally oriented structures (20-1 to 20-3) for a laminated battery cell (20) that is formed by bending a positive electrode terminal (23) and a negative electrode terminal (22), which are respectively extended from the end faces of a battery element (21), over different flat surfaces of the battery element (21) . Further, one polarity terminal of one of opposing neighboring laminated battery cells is in partial planar contact with a polarity terminal that belongs to the other one of the opposing neighboring laminated battery cells (20) and has a polarity opposite to the polarity of the one polarity terminal. Furthermore, each laminated battery cell (20) having the stacked structure is fixed by applying vertical pressure to the contact surface of the polarity terminal with a pressing mechanism.

## Description

### Technical Field

The present invention relates to a battery module that uses a flat battery cell or a laminated battery cell.

### Background Art

In recent years, a battery module formed by series-connecting a plurality of battery cells has attracted attention as a secondary battery for large current charge/discharge. As a battery cell for such an application, a rectangular battery cell, which uses a rectangular battery vessel, is proposed because a cylindrical sealed battery is low in space occupation ratio and in volumetric efficiency when disposed in plurality. A flat rectangular battery cell formed by housing flat electrodes in a battery vessel is also counted as such a rectangular batter cell. Meanwhile, the cylindrical sealed battery generally uses an iron-based vessel for cost reduction purposes. However, iron has a high specific gravity and restricts the improvement of a battery's weight efficiency. Therefore, a laminated battery cell is proposed. The laminated battery cell uses a battery vessel formed by laminated film that includes an aluminum foil or other internal layer as a gas barrier layer.

Various methods for connecting battery cells to form a battery module are proposed. For example, the methods described in Patent Documents 1 and 2 are used to decrease the electrical resistance exhibited by a terminal resistor and by connecting member (busbar).

As for a flat rectangular battery and an assembled battery that are disclosed in Japanese Unexamined Patent Application Publication No. 2011-071053, a positive external electrode is disposed on one wide surface of each flat rectangular battery and a negative electrode external terminal is disposed on the other wide surface. Further, as regards wide surfaces on which a pair of neighboring flat rectangular batteries oppose each other (these surfaces are referred to as the opposing wide surfaces), the positive electrode external terminal is disposed on the opposing wide surface of one flat battery, whereas the negative electrode external terminal is disposed on the opposing wide surface of the other flat battery. These two external terminals are positioned so that they are mirror images of each other. Furthermore, the positive and negative electrode external terminals are shaped as appropriate for interconnection and joined together with the wide surfaces opposing each other to series-connect the flat rectangular batteries. The above-described configuration is employed to reduce the electrical resistance.

An electricity storage device and an electric storage module that are disclosed in Japanese Unexamined Patent Application Publication No. 2011-66118 include a pair of electrode terminals, namely, a positive electrode terminal and a negative electrode terminal. The positive electrode terminal is extended outward from one end of a direction in which two faces of a vessel oppose each other so that a junction surface is connected to and substantially flush with one of the two opposing faces of the vessel. Similarly, the negative electrode terminal is extended outward from the other end of the direction in which the two faces of a vessel oppose each other so that the junction surface is connected to and substantially flush with the other one of the two opposing faces of the vessel. The electrode terminals between neighboring electricity storage devices are disposed so that they are mirror images of each other with respect to the neighboring faces of the vessels. Further, the electrode terminals are disposed so that the junction surfaces of different-polarity terminals overlap with each other between the neighboring electricity storage devices. The above-described configuration is employed to permit the efficient processing of inter-terminal junction and reduce the electrical resistance.

### Summary

However, the technologies disclosed in Patent Documents 1 and 2 are applicable to flat rectangular battery cells and cannot be directly applied to laminated battery cells.

As such being the case, a generally employed method for connecting the laminated battery cells is to connect electrodes extended from battery elements of the laminated battery cells, for instance, by welding or by clipping. However, this results in increased man-hours. Further, if an electrode is moved by vibration or other external force, laminate sheet breakage, short-circuiting of positive and negative electrode sheets, or other problem may occur. To avoid such problems, it is necessary to provide increased strength and enhanced insulation.

The present invention has been made in view of the above circumstances and has an object to provide a battery module and a flat battery cell for use with the battery module that can reduce the man-hours required for connecting flat battery cells and eliminate the necessity of providing increased strength and enhanced insulation against vibration and other external forces.

In accomplishing the above object, according to an aspect of the present invention, there is provided a battery module that is formed by stacking a plurality of unidirectionally oriented structures each of which is formed by bending a positive electrode terminal of a flat battery cell and a negative electrode terminal of the flat battery cell over different opposing flat surfaces of the flat battery cell. One polarity terminal of one of opposing neighboring flat battery cells in the stacked structure is in partial planar contact with a polarity terminal that belongs to the other one of the opposing neighboring flat battery cells and has a polarity opposite to the polarity of the one polarity terminal.

The present invention makes it possible to provide a battery module and a flat battery cell for use with the battery module that can reduce the man-hours required for connecting flat battery cells and eliminate the necessity of providing increased strength and enhanced insulation against vibration and other external forces.

### Brief Description of the Drawings

FIG. 1 illustrates a battery module according to a first embodiment of the present invention, in which (a) is a perspective view of the battery module, and (b) is a drawing illustrating an internal structure.
FIG. 2 illustrates a flat battery cell according to the first embodiment, in which (a) is a perspective view, (b) is a plan view, and (c) is a cross-sectional view.
FIG. 3 illustrates the battery module according to a second embodiment of the present invention, in which (a) is a perspective view, and (b) is a diagram illustrating an internal structure.
FIG. 4 illustrates the flat battery cell according to the second embodiment, in which (a) is a perspective view, (b) is a plan view, and (c) is a cross-sectional view.
FIG. 5 is a diagram illustrating the internal structure of the battery module according to a third embodiment of the present invention.
FIG. 6 is a diagram illustrating the internal structure of the battery module according to a fourth embodiment of the present invention.
FIG. 7 is a diagram illustrating the internal structure of the battery module according to a fifth embodiment of the present invention.
FIG. 8 is a diagram illustrating the internal structure of the battery module according to a sixth embodiment of the present invention.

### Detailed Description

First to sixth embodiments of a battery module according to the present invention and of a flat battery cell according to the present invention will now be sequentially described with reference to the accompanying drawings.

### First Embodiment

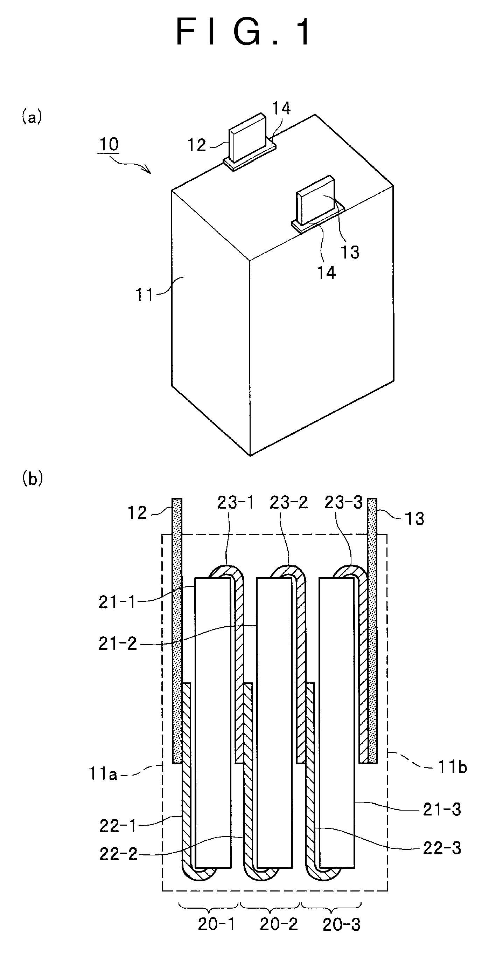

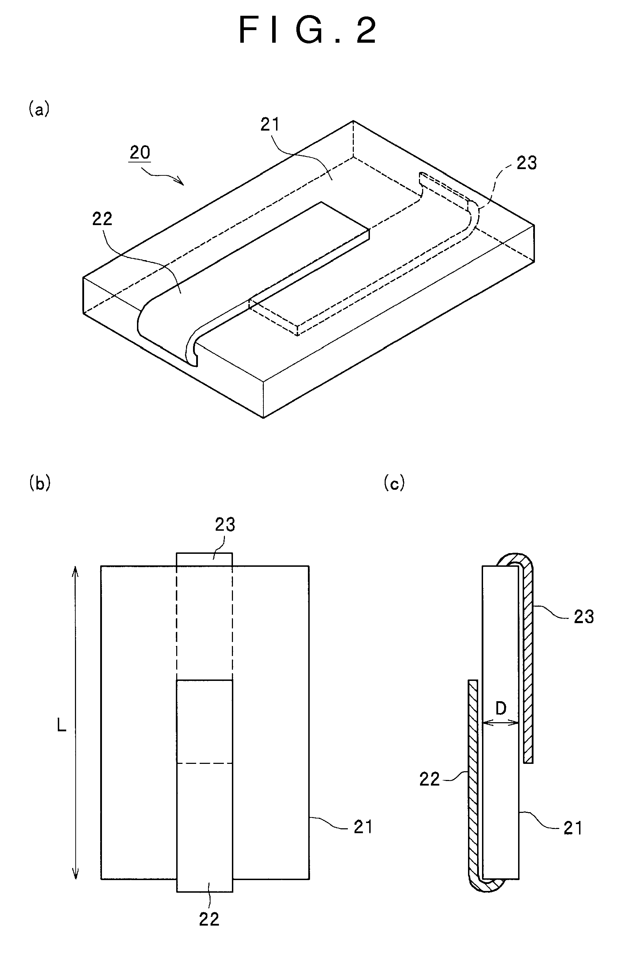

First of all, the battery module and flat battery cell according to the first embodiment will be described below with reference to FIGS. 1 and 2. FIG. 1(a) is a perspective view of the battery module 10 according to the first embodiment. FIG. 1(b) is a cross-sectional view illustrating the internal structure of the battery module 10 according to the present embodiment. FIG. 2 illustrates the flat battery cell for use with the battery module shown in FIG. 1, in which FIG. 2(a) is a perspective view, FIG. 2(b) is a plan view, and FIG. 2(c) is a cross-sectional view. In the present embodiment, a laminated battery cell having a positive electrode terminal and a negative electrode terminal, which are respectively extended from the end faces of a battery element, is used as the flat battery cell.

At first, referring to FIG. 2, a structure 20 for the laminated battery cell used in the battery module 10 according to the present embodiment will be described. The structure 20 for the laminated battery cell is formed by bending a positive electrode terminal 23 and a negative electrode terminal 22, which are respectively extended from the end faces of the battery element 21, over different flat surfaces of the battery element 21. More specifically, referring to FIG. 2(a), the structure 20 for the laminated battery cell has a structure that is formed by bending the positive electrode terminal 23, which is extended from a right rear end face, over a lower flat surface and bending the negative electrode terminal 22, which is extended from a left front end face, over an upper flat surface.

The battery element 21 of the laminated battery cell may have a conventional internal structure. Referring to FIG. 2, the battery element 21 has a thickness of D and the flat surface has a length of L. The positive electrode terminal 23 and the negative electrode terminal 22 are made of copper, aluminum, nickel, or the like and approximately 100 µm in thickness. Therefore, the positive and negative electrode terminals 23, 22 can be bent with ease without using a special processing machine.

As inferred from FIG. 2(b), in the stacked structure obtained by stacking a plurality of unidirectionally oriented structures 20 for the laminated battery cell according to the present embodiment, each structure 20 is configured so that one polarity terminal (e.g., the positive electrode terminal 23) of one of opposing neighboring laminated battery cells is in partial planar contact with a polarity terminal (e.g., the negative electrode terminal 22) that belongs to the other one of the opposing neighboring laminated battery cells and has a polarity opposite to the polarity of the one polarity terminal.

Further, as inferred from FIG. 1(b) and FIG. 2(b), in the above-mentioned stacked structure, the center of a stack plane of the stacked structure coincides with a region where the different-polarity terminals of the laminated battery cell (the positive electrode terminal 23 and the negative electrode terminal 22) are in planar contact with each other. The stack plane of the stacked structure is the flat surface of the battery element 21 of the laminated battery cell.

The battery module 10, which is formed by stacking the unidirectionally oriented structures 20 for the laminated battery cell, will now be described with reference to FIG. 1. As indicated by the internal structure shown in FIG. 1(b), the battery module 10 has a stacked structure that is formed by horizontally stacking the unidirectionally oriented structures 20-1 to 20-3 for the laminated battery cell.

In the stacked structure, one polarity terminal of one of opposing neighboring laminated battery cells is in partial planar contact with a polarity terminal that belongs to the other one of the opposing neighboring laminated battery cells and has a polarity opposite to the polarity of the one polarity terminal. More specifically, the positive electrode terminal 23-1 of the structure 20-1 for the laminated battery cell is in partial planar contact with the negative electrode terminal 22-2 of the structure 20-2 for the laminated battery cell, and the positive electrode terminal 23-2 of the structure 20-2 for the laminated battery cell is in partial planar contact with the negative electrode terminal 22-3 of the structure 20-3 for the laminated battery cell.

Further, in the stacked structure, the negative electrode terminal 22-1 of the structure 20-1 for the laminated battery cell is in partial planar contact with a negative electrode terminal 12 of the battery module 10, and the positive electrode terminal 23-3 of the structure 20-3 for the laminated battery cell is in planar contact with a positive electrode terminal 13 of the battery module 10.

Furthermore, as shown in FIG. 1(a), the stacked structure, which is configured as described above, is housed in a metal vessel 11, and an insulating member 14 is disposed to provide electrical insulation between the vessel 11 and the negative electrode terminal 12 and between the vessel 11 and the positive electrode terminal 13. The insulating member 14 is required when the vessel 11 is made of a conductive material, but is not required if the vessel 11 is made of a nonconductive material such as plastic or resin.

In the vessel 11 for the battery module 10, the stacked structure (the structures 20-1 to 20-3 for the laminated battery cell) is fixed by a pressing mechanism that applies vertical pressure to the contact surface of a polarity terminal. In the pressing mechanism, before the stacked structure is mounted in its position, surfaces 11a, 11b parallel to the contact surface of the polarity terminal in the vessel 11 for the battery module 10 are convexly formed toward the inside of the vessel 11. When the stacked structure is mounted in its position, the elastic force of the surfaces 11a, 11b parallel to the contact surface of the polarity terminal applies vertical pressure to the contact surface of the polarity terminal. The vertical pressure, which is applied to the contact surface of the polarity terminal by the pressing mechanism, not only provides electrical connection between the laminated battery cells having the stacked structure, but also provides electrical connection between the stacked structure and the negative electrode terminal 12 or the positive electrode terminal 13.

As described above, for the battery module 10 and laminated battery cell (flat battery cell) according to the present embodiment, the stacked structure is obtained by stacking the unidirectionally oriented structures (20-1 to 20-3) for the laminated battery cell that is formed by bending the positive electrode terminal 23 and the negative electrode terminal 22, which are respectively extended from the end faces of the battery element 21, over different flat surfaces of the battery element 21. Further, one polarity terminal of one of opposing neighboring laminated battery cells is in partial planar contact with a polarity terminal that belongs to the other one of the opposing neighboring laminated battery cells and has a polarity opposite to the polarity of the one polarity terminal. Furthermore, each laminated battery cell having the stacked structure is fixed by applying vertical pressure to the contact surface of the polarity terminal with the pressing mechanism.

Consequently, the battery module 10 according to the present embodiment is assembled by basically performing a process of bending the polarity terminal of the laminated battery cell, a process of forming the stacked structure of the structures 20 for the laminated battery cell, and a process of mounting the stacked structure in the vessel 11. Each of these processes can be performed with ease. In addition, the man-hours required for assembling the battery module are reduced as compared to a case where the battery module has a conventional coupling structure. Moreover, the comparison of only the man-hours required for connecting the battery cells indicates that only the process of bending and the process of forming the stacked structure are required for the battery module 10 according to the present embodiment. This makes it possible to implement not only a battery module capable of reducing the man-hours required for connecting flat battery cells, but also a flat battery cell for use with the battery module.

Further, as regards the fixation of each laminated battery cell having the stacked structure, when, for instance, the pressing mechanism is implemented by using the elastic force of the surfaces 11a, 11b parallel to the contact surface of the polarity terminal for the vessel 11, no fixation mechanism needs to be included in the vessel 11. Hence, the flat battery cells can be connected by using a simpler structure. Furthermore, as the coupling structure is fixed by the pressing mechanism within the vessel 11, the structure 20 for the laminated battery cell can barely move within the vessel 11. Hence, short-circuiting due to vibration or other external force can be avoided. This makes it possible to eliminate the necessity of providing increased strength and enhanced insulation against vibration and other external forces.

Moreover, the battery module 10 according to the present embodiment is constructed so that the center of the stack plane of the stacked structure coincides with a region where the different-polarity terminals of the laminated battery cell are in planar contact with each other. This ensures that the stacked structure is well balanced (with respect to the vertical direction in FIG. 1(b)). Therefore, uniform pressure is applied to the contact surface of the polarity terminal. This makes it possible to provide increased durability against vibration and other external forces.

### Second Embodiment

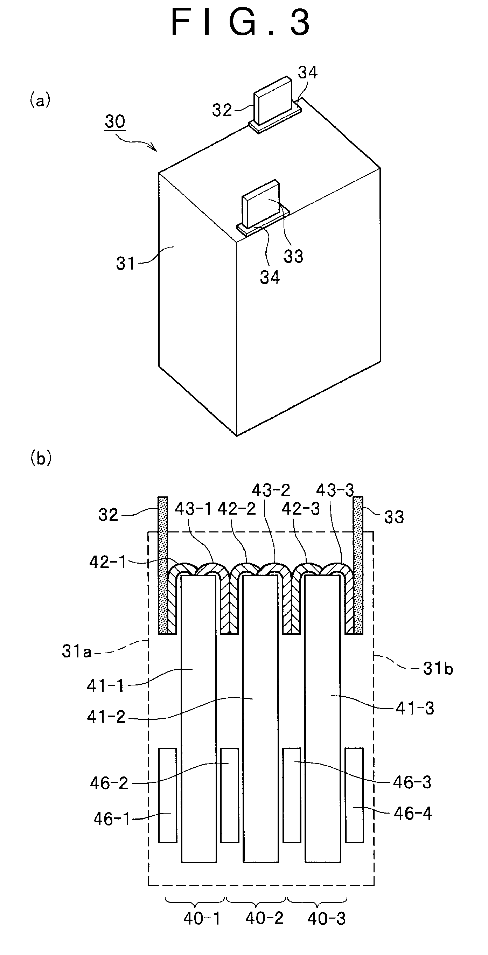

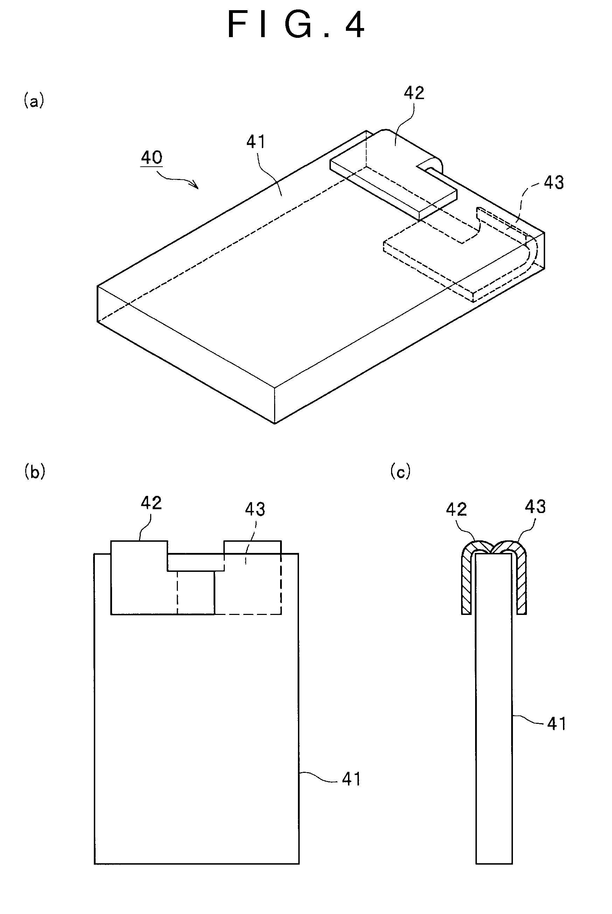

The battery module and flat battery cell according to the second embodiment will now be described with reference to FIGS. 3 and 4. FIG. 3(a) is a perspective view of the battery module 30 according to the second embodiment. FIG. 3(b) is a cross-sectional view illustrating the internal structure of the battery module 30 according to the present embodiment. FIG. 4 illustrates the flat battery cell for use wit the battery module shown in FIG. 3, in which FIG. 4(a) is a perspective view, FIG. 4 (b) is a plan view, and FIG. 4 (c) is a cross-sectional view. In the present embodiment, a laminated battery cell having a positive electrode terminal and a negative electrode terminal, which are extended from an end face of a battery element, is used as the flat battery cell.

At first, referring to FIG. 4, a structure 40 for the laminated battery cell used in the battery module 30 according to the present embodiment will be described. The structure 40 for the laminated battery cell is formed by bending a positive electrode terminal 43 and a negative electrode terminal 42, which are extended from an end face of the battery element 41, over different flat surfaces of the battery element 41. More specifically, referring to FIG. 4(a), the structure 40 for the laminated battery cell has a structure that is formed by bending the positive electrode terminal 43, which is extended from a right rear end face, over a lower flat surface and bending the negative electrode terminal 42, which is extended from the right rear end face, over an upper flat surface.

The battery element 41 of the laminated battery cell may have a conventional internal structure. Further, the positive electrode terminal 43 and the negative electrode terminal 42 are made of copper, aluminum, nickel, or the like, as is the case with the first embodiment, and approximately 100 µm in thickness. Therefore, the positive and negative electrode terminals 43, 42 can be bent with ease without using a special processing machine.

As inferred from FIG. 4(b), in the stacked structure obtained by stacking a plurality of unidirectionally oriented structures 40 for the laminated battery cell according to the present embodiment, each structure 40 is configured so that one polarity terminal (e.g., the positive electrode terminal) of one of opposing neighboring laminated battery cells is in partial planar contact with a polarity terminal (e.g., the negative electrode terminal) that belongs to the other one of the opposing neighboring laminated battery cells and has a polarity opposite to the polarity of the one polarity terminal. The contact region between the different-polarity terminals is embodied by shaping the positive electrode terminal 43 and the negative electrode terminal 42 like an inverted L.

The battery module 30, which is formed by stacking the unidirectionally oriented structures 40 for the laminated battery cell, will now be described with reference to FIG. 3. As indicated by the internal structure shown in FIG. 3(b), the battery module 30 has a stacked structure that is formed by horizontally stacking the unidirectionally oriented structures 40-1 to 40-3 for the laminated battery cell. Further, spacers 46-1 to 46-4 are provided as buffering members in a space within the stacked structure, which has neither a positive electrode terminal nor a negative electrode terminal.

In the stacked structure, one polarity terminal of one of opposing neighboring laminated battery cells is in partial planar contact with a polarity terminal that belongs to the other one of the opposing neighboring laminated battery cells and has a polarity opposite to the polarity of the one polarity terminal. More specifically, the positive electrode terminal 43-1 of the structure 40-1 for the laminated battery cell is in partial planar contact with the negative electrode terminal 42-2 of the structure 40-2 for the laminated battery cell, and the positive electrode terminal 43-2 of the structure 40-2 for the laminated battery cell is in partial planar contact with the negative electrode terminal 42-3 of the structure 40-3 for the laminated battery cell.

Further, in the stacked structure, the negative electrode terminal 42-1 of the structure 40-1 for the laminated battery cell is in partial planar contact with a negative electrode terminal 32 of the battery module 40, and the positive electrode terminal 43-3 of the structure 40-3 for the laminated battery cell is in planar contact with a positive electrode terminal 33 of the battery module 30.

Furthermore, as shown in FIG. 3(a), the stacked structure, which is configured as described above, is housed in a metal vessel 31, and an insulating member 34 is disposed to provide electrical insulation between the vessel 31 and the negative electrode terminal 32 and between the vessel 31 and the positive electrode terminal 33. The insulating member 34 is required when the vessel 31 is made of a conductive material, but is not required if the vessel 31 is made of a nonconductive material such as plastic or resin.

In the vessel 31 for the battery module 40, the stacked structure (the structures 40-1 to 40-3 for the laminated battery cell) is fixed by a pressing mechanism that applies vertical pressure to the contact surface of a polarity terminal, as is the case with the first embodiment. In the pressing mechanism, before the stacked structure is mounted in its position, surfaces 31a, 31b parallel to the contact surface of the polarity terminal in the vessel 31 for the battery module 30 are convexly formed toward the inside of the vessel 31. When the stacked structure is mounted in its position, the elastic force of the surfaces 31a, 31b parallel to the contact surface of the polarity terminal applies vertical pressure to the contact surface of the polarity terminal. The vertical pressure, which is applied to the contact surface of the polarity terminal by the pressing mechanism, not only provides electrical connection between the laminated battery cells having the stacked structure, but also provides electrical connection between the stacked structure and the negative electrode terminal 32 or the positive electrode terminal 33. The spacers 46-1 to 46-4 are provided between the structures 40-1 to 40-3 for the laminated battery cell and between the structures 40-1 to 40-3 and the surfaces 31a, 31b of the vessel 31 to ensure that the pressure exerted by the pressing mechanism is uniformly applied to the contact surface of the polarity terminal.

As described above, for the battery module 30 and laminated battery cell (flat battery cell) according to the present embodiment, the stacked structure is obtained by stacking the unidirectionally oriented structures (40-1 to 40-3) for the laminated battery cell that is formed by bending the positive electrode terminal 43 and the negative electrode terminal 42, which are respectively extended from the end faces of the battery element 41, over different flat surfaces of the battery element 41. Further, one polarity terminal of one of opposing neighboring laminated battery cells is in partial planar contact with a polarity terminal that belongs to the other one of the opposing neighboring laminated battery cells and has a polarity opposite to the polarity of the one polarity terminal. Furthermore, each laminated battery cell having the stacked structure is fixed by applying vertical pressure to the contact surface of the polarity terminal with the pressing mechanism.

Consequently, the battery module 30 according to the present embodiment is assembled with ease, as is the case with the first embodiment. In addition, the man-hours required for assembling the battery module are reduced as compared to a case where the battery module has a conventional coupling structure. Moreover, the battery cells for the battery module 30 according to the present embodiment can be connected by performing only the process of bending and the process of forming the stacked structure. This makes it possible to implement not only a battery module capable of reducing the man-hours required for connecting flat battery cells, but also a flat battery cell for use with the battery module.

Further, as regards the fixation of each laminated battery cell having the stacked structure, when, for instance, the pressing mechanism is implemented by using the elastic force of the surfaces 31a, 31b parallel to the contact surface of the polarity terminal for the vessel 31, no fixation mechanism needs to be included in the vessel 31. Hence, the flat battery cells can be connected by using a simpler structure. Furthermore, as the coupling structure is fixed by the pressing mechanism within the vessel 31, the structure 40 for the laminated battery cell can barely move within the vessel 31. Hence, short-circuiting due to vibration or other external force can be avoided. This makes it possible to eliminate the necessity of providing increased strength and enhanced insulation against vibration and other external forces.

Moreover, the battery module 30 according to the present embodiment includes the spacers (buffering members) 46-1 to 46-4, which are provided in a space within the stacked structure, which has neither a positive electrode terminal nor a negative electrode terminal. This ensures that the stacked structure is well balanced (with respect to the vertical direction in FIG. 3(b)). Therefore, uniform pressure is applied to the contact surface of the polarity terminal. This makes it possible to provide increased durability against vibration and other external forces.

### Third Embodiment

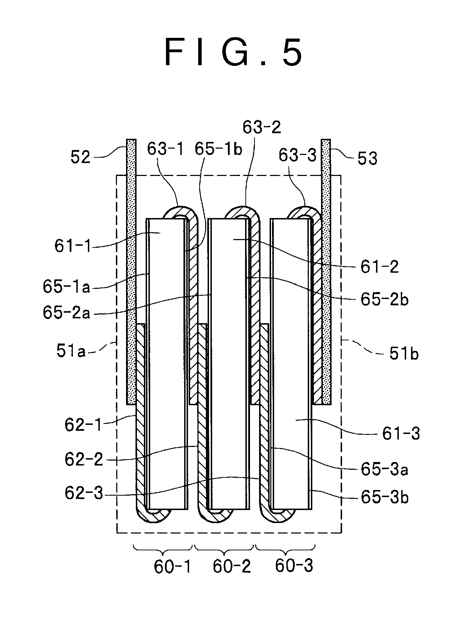

The battery module and flat battery cell according to the third embodiment will now be described with reference to FIG. 5. FIG. 5 is a cross-sectional view illustrating the internal structure of the battery module according to the third embodiment. In the present embodiment, a flat rectangular battery cell having a positive electrode terminal and a negative electrode terminal, which are respectively extended from the end faces of a battery element, is used as the flat battery cell.

Referring to FIG. 5, the battery module according to the present embodiment has a stacked structure that is formed by horizontally stacking unidirectionally oriented structures 60-1 to 60-3 for the flat rectangular battery cell.

The structure 60-1 for the flat rectangular battery cell will be described below as a representative. The structure 60-1 for the flat rectangular battery cell is formed by bending a positive electrode terminal 63-1 and a negative electrode terminal 62-1, which are respectively extended from the upper and lower end faces of a battery element 61-1, over different flat surfaces of the battery element 61-1 with insulating members 65-1a, 65-1b positioned in-between. More specifically, the positive electrode terminal 63-1 extended from the upper end face is bent over the right flat surface with the insulating member 65-1b positioned in-between, and the negative electrode terminal 62-1 extended from the lower end face is bent over the left flat surface with the insulating member 65-1a positioned in-between.

The battery element 61-1 of the flat rectangular battery cell may have a conventional internal structure. The insulating members 65-1a, 65-1b are required when a battery element vessel for the flat rectangular battery cell is made of a conductive material, but are not required if the vessel is made of a nonconductive material such as plastic or resin.

The battery module according to the present embodiment, which has the stacked structure obtained by stacking the unidirectionally oriented structures 60-1 to 60-3 for the flat rectangular battery cell, is configured so that one polarity terminal of one of opposing neighboring flat rectangular battery cells is in partial planar contact with a polarity terminal that belongs to the other one of the opposing neighboring flat rectangular battery cells and has a polarity opposite to the polarity of the one polarity terminal. Further, the center of the stack plane of the stacked structure coincides with a region where the different-polarity terminals of the flat rectangular battery cell are in planar contact with each other. Here, the stack plane of the stacked structure is a flat surface of the battery element for the flat rectangular battery cell.

More specifically, the positive electrode terminal 63-1 of the structure 60-1 for the flat rectangular battery cell is in partial planar contact with the negative electrode terminal 62-2 of the structure 60-2 for the flat rectangular battery cell, and the positive electrode terminal 63-2 of the structure 60-2 for the flat rectangular battery cell is in partial planar contact with the negative electrode terminal 62-3 of the structure 60-3 for the flat rectangular battery cell. Further, in the stacked structure, the negative electrode terminal 62-1 of the structure 60-1 for the flat rectangular battery cell is in partial planar contact with a negative electrode terminal 62 of the battery module, and the positive electrode terminal 63-3 of the structure 60-3 for the flat rectangular battery cell is in planar contact with a positive electrode terminal 63 of the battery module.

In the vessel for the battery module, the stacked structure (the structures 60-1 to 60-3 for the flat rectangular battery cell) is fixed by a pressing mechanism that applies vertical pressure to the contact surface of a polarity terminal, as is the case with the first embodiment. In the pressing mechanism, before the stacked structure is mounted in its position, surfaces 51a, 51b parallel to the contact surface of the polarity terminal in the vessel for the battery module are convexly formed toward the inside of the vessel. When the stacked structure is mounted in its position, the elastic force of the surfaces 51a, 51b parallel to the contact surface of the polarity terminal applies vertical pressure to the contact surface of the polarity terminal. The vertical pressure, which is applied to the contact surface of the polarity terminal by the pressing mechanism, not only provides electrical connection between the flat rectangular battery cells having the stacked structure, but also provides electrical connection between the stacked structure and the negative electrode terminal 52 or the positive electrode terminal 53.

As described above, for the battery module and flat rectangular battery cell according to the present embodiment, the stacked structure is obtained by stacking the unidirectionally oriented structures (60-1 to 60-3) for the flat battery cell that is formed by bending the positive electrode terminal 63-1 and the negative electrode terminal 62-1, which are respectively extended from the end faces of the battery element 61-1, over different flat surfaces of the battery element 61-1 with insulating members 65-1a, 65-1b positioned in-between. Further, one polarity terminal of one of opposing neighboring flat rectangular battery cells is in partial planar contact with a polarity terminal that belongs to the other one of the opposing neighboring flat rectangular battery cells and has a polarity opposite to the polarity of the one polarity terminal. Furthermore, each flat battery cell having the stacked structure is fixed by applying vertical pressure to the contact surface of the polarity terminal with the pressing mechanism.

Consequently, the battery module according to the present embodiment is assembled by basically performing a process of bending the polarity terminal of the flat rectangular battery cell, a process of forming the stacked structure of the structures 60-1 to 60-3 for the flat rectangular battery cell, and a process of mounting the stacked structure in the vessel. Each of these processes can be performed with ease. In addition, the man-hours required for assembling the battery module are reduced as compared to a case where the battery module has a conventional coupling structure. Moreover, the comparison of only the man-hours required for connecting the battery cells indicates that only the process of bending and the process of forming the stacked structure are required for the battery module according to the present embodiment. This makes it possible to implement not only a battery module capable of reducing the man-hours required for connecting flat battery cells, but also a flat battery cell for use with the battery module.

Further, as regards the fixation of each flat rectangular battery cell having the stacked structure, when, for instance, the pressing mechanism is implemented by using the elastic force of the surfaces 51a, 51b parallel to the contact surface of the polarity terminal for the vessel, no fixation mechanism needs to be included in the vessel. Hence, the flat battery cells can be connected by using a simpler structure. Furthermore, as the coupling structure is fixed by the pressing mechanism within the vessel, the structures 60-1 to 60-3 for the flat rectangular battery cell can barely move within the vessel. Hence, short-circuiting due to vibration or other external force can be avoided. This makes it possible to eliminate the necessity of providing increased strength and enhanced insulation against vibration and other external forces.

Moreover, the battery module according to the present embodiment is constructed so that the center of the stack plane of the stacked structure coincides with a region where the different-polarity terminals of the flat battery cell are in planar contact with each other. This ensures that the stacked structure is well balanced (with respect to the vertical direction in FIG. 5). Therefore, uniform pressure is applied to the contact surface of the polarity terminal. This makes it possible to provide increased durability against vibration and other external forces.

### Fourth Embodiment

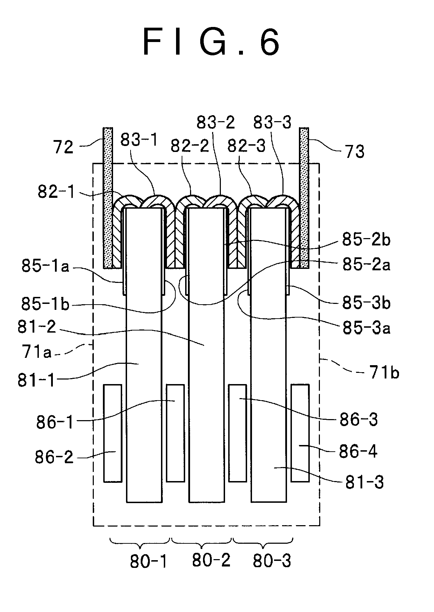

The battery module and flat battery cell according to the fourth embodiment will now be described with reference to FIG. 6. FIG. 6 is a cross-sectional view illustrating the internal structure of the battery module according to the fourth embodiment. In the present embodiment, a flat rectangular battery cell having a positive electrode terminal and a negative electrode terminal, which are extended from one end face of a battery element, is used as the flat battery cell.

Referring to FIG. 6, the battery module according to the present embodiment has a stacked structure that is formed by horizontally stacking unidirectionally oriented structures 80-1 to 80-3 for the flat rectangular battery cell. Spacers 86-1 to 86-4 are provided as buffering members in a space within the stacked structure, in which the positive and negative electrode terminals of the structures 80-1 to 80-3 for the flat rectangular battery cell do not exist.

The structure 80-1 for the flat rectangular battery cell will be described below as a representative. The structure 80-1 for the flat rectangular battery cell is formed by bending a positive electrode terminal 83-1 and a negative electrode terminal 82-1, which are extended from the upper end face of a battery element 81-1, over different flat surfaces of the battery element 81-1 with insulating members 85-1a, 85-1b positioned in-between. More specifically, the positive electrode terminal 83-1 is bent over the right flat surface with the insulating member 85-1b positioned in-between, and the negative electrode terminal 82-1 is bent over the left flat surface with the insulating member 85-1a positioned in-between.

The battery element 81-1 of the flat rectangular battery cell may have a conventional internal structure. The insulating members 85-1a, 85-1b are required when a battery element vessel for the flat rectangular battery cell is made of a conductive material, but are not required if the vessel is made of a nonconductive material such as plastic or resin.

The battery module according to the present embodiment, which has the stacked structure obtained by stacking the unidirectionally oriented structures 80-1 to 80-3 for the flat rectangular battery cell, is configured so that one polarity terminal of one of opposing neighboring flat rectangular battery cells is in partial planar contact with a polarity terminal that belongs to the other one of the opposing neighboring flat rectangular battery cells and has a polarity opposite to the polarity of the one polarity terminal. Further, the center of the stack plane of the stacked structure coincides with a region where the different-polarity terminals of the flat rectangular battery cell are in planar contact with each other. Here, the stack plane of the stacked structure is a flat surface of the battery element for the flat rectangular battery cell.

More specifically, the positive electrode terminal 83-1 of the structure 80-1 for the flat rectangular battery cell is in partial planar contact with the negative electrode terminal 82-2 of the structure 80-2 for the flat rectangular battery cell, and the positive electrode terminal 83-2 of the structure 80-2 for the flat rectangular battery cell is in partial planar contact with the negative electrode terminal 82-3 of the structure 80-3 for the flat rectangular battery cell. Further, in the stacked structure, the negative electrode terminal 82-1 of the structure 80-1 for the flat rectangular battery cell is in partial planar contact with a negative electrode terminal 82 of the battery module, and the positive electrode terminal 83-3 of the structure 80-3 for the flat rectangular battery cell is in planar contact with a positive electrode terminal 83 of the battery module.

In the vessel for the battery module, the stacked structure (the structures 80-1 to 80-3 for the flat rectangular battery cell) is fixed by a pressing mechanism that applies vertical pressure to the contact surface of a polarity terminal, as is the case with the first embodiment. In the pressing mechanism, before the stacked structure is mounted in its position, surfaces 81a, 81b parallel to the contact surface of the polarity terminal in the vessel for the battery module are convexly formed toward the inside of the vessel. When the stacked structure is mounted in its position, the elastic force of the surfaces 81a, 81b parallel to the contact surface of the polarity terminal applies vertical pressure to the contact surface of the polarity terminal. The vertical pressure, which is applied to the contact surface of the polarity terminal by the pressing mechanism, not only provides electrical connection between the flat rectangular battery cells having the stacked structure, but also provides electrical connection between the stacked structure and the negative electrode terminal 82 or the positive electrode terminal 83. The spacers 86-1 to 86-4 are provided between the structures 80-1 and 80-3 for the flat battery cell and between the structures 80-1 to 80-3 and the surfaces 81a, 81b of the vessel to ensure that the pressure exerted by the pressing mechanism is uniformly applied to the contact surface of the polarity terminal.

As described above, for the battery module and flat rectangular battery cell according to the present embodiment, the stacked structure is obtained by stacking the unidirectionally oriented structures (80-1 to 80-3) for the flat battery cell that is formed by bending the positive electrode terminal 83-1 and the negative electrode terminal 82-1, which are extended from one end face of the battery element 81-1, over different flat surfaces of the battery element 81-1 with insulating members 85-1a, 85-1b positioned in-between. Further, one polarity terminal of one of opposing neighboring flat rectangular battery cells is in partial planar contact with a polarity terminal that belongs to the other one of the opposing neighboring flat rectangular battery cells and has a polarity opposite to the polarity of the one polarity terminal. Furthermore, each flat battery cell having the stacked structure is fixed by applying vertical pressure to the contact surface of the polarity terminal with the pressing mechanism.

Consequently, the battery module according to the present embodiment is assembled by basically performing a process of bending the polarity terminal of the flat rectangular battery cell, a process of forming the stacked structure of the structures 80-1 to 80-3 for the flat rectangular battery cell, and a process of mounting the stacked structure in the vessel. Each of these processes can be performed with ease. In addition, the man-hours required for assembling the battery module are reduced as compared to a case where the battery module has a conventional coupling structure. Moreover, the comparison of only the man-hours required for connecting the battery cells indicates that only the process of bending and the process of forming the stacked structure are required for the battery module according to the present embodiment. This makes it possible to implement not only a battery module capable of reducing the man-hours required for connecting flat battery cells, but also a flat battery cell for use with the battery module.

Further, as regards the fixation of each flat rectangular battery cell having the stacked structure, when, for instance, the pressing mechanism is implemented by using the elastic force of the surfaces 81a, 81b parallel to the contact surface of the polarity terminal for the vessel, no fixation mechanism needs to be included in the vessel. Hence, the flat battery cells can be connected by using a simpler structure. Furthermore, as the coupling structure is fixed by the pressing mechanism within the vessel, the structures 80-1 to 80-3 for the flat rectangular battery cell can barely move within the vessel. Hence, short-circuiting due to vibration or other external force can be avoided. This makes it possible to eliminate the necessity of providing increased strength and enhanced insulation against vibration and other external forces.

Moreover, the battery module according to the present embodiment includes the spacers (buffering members) 86-1 to 86-4, which are provided in a space within the stacked structure, which has neither a positive electrode terminal nor a negative electrode terminal. This ensures that the stacked structure is well balanced (with respect to the vertical direction in FIG. 6). Therefore, uniform pressure is applied to the contact surface of the polarity terminal. This makes it possible to provide increased durability against vibration and other external forces.

### Fifth Embodiment

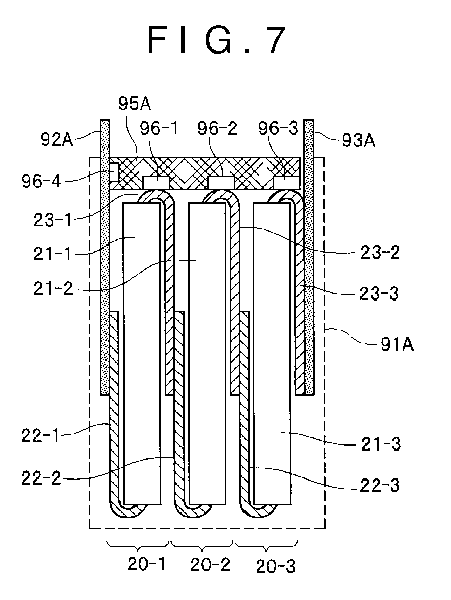

The battery module according to the fifth embodiment will now be described with reference to FIG. 7. FIG. 7 is a cross-sectional view illustrating the internal structure of the battery module according to the fifth embodiment.

The battery module according to the present embodiment is obtained by adding a battery cell monitoring device 95A to the battery module according to the first embodiment (see FIGS. 1A and 1B). The battery cell monitoring device 95A detects a terminal voltage of a flat battery cell (a laminated battery cell in the present embodiment) included in the battery module or detects the terminal voltage of the flat battery cell and compares it to a predetermined voltage. Elements identical with those of the battery module according to the first embodiment (FIGS. 1A and 1B) are designated by the same reference numerals as the corresponding elements and will not be redundantly described.

Referring to FIG. 7, the battery cell monitoring device 95A is added to the upper side in the vessel for the battery module. The reference numerals 96-1 to 96-4 denote terminals that are electrically connected to the polarity terminals of the laminated battery cell. These terminals 96-1 to 96-4 are in contact with the polarity terminals of the laminated battery cell on a plane that is perpendicular to the contact surfaces of different-polarity terminals of the laminated battery cell. More specifically, the terminals 96-1 to 96-3 are electrically connected, in a horizontally-oriented planar contact manner, to bends of polarity electrode terminals 23-1 to 23-3 of the structures 20-1 to 20-3 for the laminated battery cell, respectively. The terminal 96-4 is electrically connected, in a vertically-oriented planar contact manner, to a negative electrode terminal 92A of the battery module.

As the above-described electrical connection is established, the terminal voltage of the laminated battery cell (20-1) can be detected between the terminals 96-4 and 96-1, the terminal voltage of the laminated battery cell (20-2) can be detected between the terminals 96-1 and 96-2, and the terminal voltage of the laminated battery cell (20-3) can be detected between the terminals 96-2 and 96-3.

### Sixth Embodiment

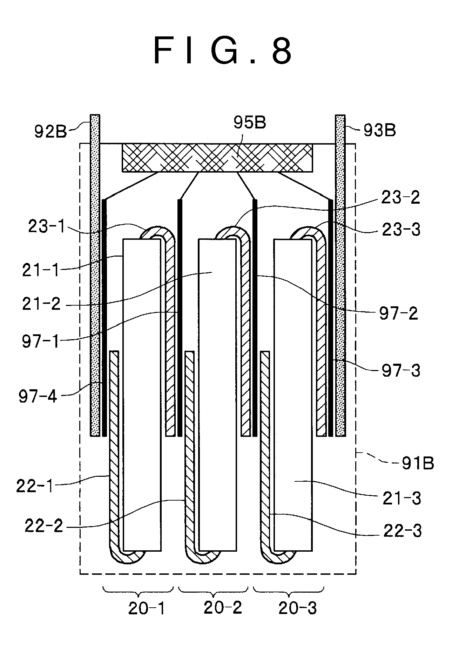

The battery module according to the sixth embodiment will now be described with reference to FIG. 8. FIG. 8 is a cross-sectional view illustrating the internal structure of the battery module according to the sixth embodiment.

The battery module according to the present embodiment is obtained by adding a battery cell monitoring device 95B to the battery module according to the first embodiment (see FIGS. 1A and 1B), as is the case with the fifth embodiment.

Referring to FIG. 8, the battery cell monitoring device 95B is added to the upper side in the vessel for the battery module. The reference numerals 97-1 to 97-4 denote terminal members that are electrically connected to the polarity terminals of the laminated battery cell. These terminals 97-1 to 97-4 are in contact with the polarity terminals of the laminated battery cell on a plane that is parallel to the contact surfaces of different-polarity terminals of the laminated battery cell. More specifically, the terminal members 97-1 to 97-3 are electrically connected, in a vertically-oriented planar contact manner, to the polarity electrode terminals 23-1 to 23-3 of the structures 20-1 to 20-3 for the laminated battery cell, respectively. The terminal member 97-4 is electrically connected, in a vertically-oriented planar contact manner, to a negative electrode terminal 92B of the battery module.

As the above-described electrical connection is established, the terminal voltage of the laminated battery cell (20-1) can be detected between the terminal members 97-4 and 97-1, the terminal voltage of the laminated battery cell (20-2) can be detected between the terminal members 97-1 and 97-2, and the terminal voltage of the laminated battery cell (20-3) can be detected between the terminal members 97-2 and 97-3.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A battery module that is formed by stacking a plurality of unidirectionally oriented structures (20-1, 20-2, 20-3) each of which is formed by bending a positive electrode terminal (13) of a flat battery cell (20) and a negative electrode terminal (12) of the flat battery cell (20) over different opposing flat surfaces of the flat battery cell, wherein one polarity terminal (22-1, 22-2, 22-3) of one of opposing neighboring flat battery cells (20) in the stacked structure is in partial planar contact with a polarity terminal (22-1, 22-2, 22-3) that belongs to the other one of the opposing neighboring flat battery cells (20) and has a polarity opposite to the polarity of the one polarity terminal (22-1, 22-2, 22-3).

2. The battery module according to claim 1, wherein the flat battery cell (20) is a laminated battery cell or a flat rectangular battery cell.

3. The battery module according to claim 1, wherein the flat battery cell (20) is a flat rectangular battery cell; and wherein each of the structures for the flat battery cell (20) is formed by bending the positive electrode terminal (23) and the negative electrode terminal (22) over different opposing flat surfaces of the flat battery cell (20) with an insulating member (14) positioned in-between.

4. The battery module according to at least one of claims 1 to 3, wherein, when the positive electrode terminal (13) and the negative electrode terminal (12) are extended in one direction of the flat battery cell (20), a buffering member (46-1, 46-2, 46-3, 46-4) exists in a space within the stacked structure, which has neither the positive electrode terminal (13) nor the negative electrode terminal (12).

5. The battery module according to at least one of claims 1 to 4, wherein, when the positive electrode terminal (13) and the negative electrode terminal (12) are extended in one direction of the flat battery cell (20), the positive electrode terminal (13) and the negative electrode terminal (12) are shaped like an inverted L.

6. The battery module according to at least one of claims 1 to 5, wherein the center of a stack plane coincides with a region where different-polarity terminals (22-1, 22-2, 22-3) of the flat battery cell are in planar contact with each other.

7. The battery module according to at least one of claims 1 to 6, comprising:
a pressing mechanism that applies vertical pressure to the contact surfaces of the polarity terminals (22-1, 22-2, 22-3);
wherein the pressing mechanism provides electrical connection between the flat battery cells (20).

8. The battery module according to claim 7, wherein, when surfaces parallel to the contact surfaces of the polarity terminals (22-1, 22-2, 22-3) in a vessel (11) for the battery module (10) are convexly formed toward the inside, the pressing mechanism, when the stacked structure is mounted in a position thereof, applies vertical pressure to the contact surfaces of the polarity terminals (22-1, 22-2, 22-3) by using the elastic force of the surfaces parallel to the contact surfaces of the polarity terminals (22-1, 22-2, 22-3).

9. The battery module according to at least one of claims 1 to 8, comprising:
a battery cell monitoring device that includes a terminal structure for providing electrical connection to the polarity terminals (22-1, 22-2, 22-3) of the flat battery cell and detects a terminal voltage of the flat battery cell (20) or detects the terminal voltage of the flat battery cell (20) and compares the detected terminal voltage to a predetermined voltage.

10. The battery module according to claim 9, wherein the terminal structure is such that the polarity terminals (22-1, 22-2, 22-3) of the flat battery cell (20) are contacted on a plane perpendicular to the contact surfaces of different-polarity terminals of the laminated battery cell (20) or of the flat battery cell (20).

11. The battery module according to claim 9, wherein the terminal structure is such that the polarity terminals (22-1, 22-2, 22-3) of the flat battery cell (20) are contacted on a plane parallel to the contact surfaces of different-polarity terminals of the flat battery cell (20).

12. A flat battery cell that is formed by bending a positive electrode terminal (13) and a negative electrode terminal (12), which are extended from one end face of the flat battery cell (20), or a positive electrode terminal (13) and a negative electrode terminal (12), which are respectively extended from two end faces of the flat battery cell (20), over different opposing flat surfaces of the flat battery cell (20), wherein one polarity terminal (22-1, 22-2, 22-3) of one of opposing neighboring flat battery cells (20) in a stacked structure, which is obtained by stacking unidirectionally-oriented flat battery cells (20), is in partial planar contact with a polarity terminal (22-1, 22-2, 22-3) that belongs to the other one of the opposing neighboring flat battery cells (20) and has a polarity opposite to the polarity of the one polarity terminal (22-1, 22-2, 22-3).

13. The flat battery cell according to claim 12, wherein the flat battery cell (20) is a flat rectangular battery cell (20); and wherein the flat battery cell (20) is formed by bending the positive electrode terminal (13) and the negative electrode terminal (12) over different opposing flat surfaces of the flat battery cell (20) with an insulating member (14) positioned in-between.

14. The flat battery cell according to claim 12 or 13, wherein, when the positive electrode terminal (13) and the negative electrode terminal (12) are extended in one direction of the flat battery cell (20), the positive electrode terminal (13) and the negative electrode terminal (12) are shaped like an inverted L.

15. The flat battery cell according to at least one of claims 12 to 14, wherein the center of a stack plane coincides with a region where different-polarity terminals of the flat battery cell (20) are in planar contact with each other within the stacked structure.
